# EUROPÄISCHE PATENTSCHRIFT

(11) **EP 1 938 665 B1**
(45) Veröffentlichungstag und Bekanntmachung des Hinweises auf die Patenterteilung: **27.07.2011**
(21) Anmeldenummer: 06806064.9
(22) Anmeldetag: 05.10.2006
(51) Int. Cl.: H05B 7/14

(54) **VORRICHTUNG UND VERFAHREN ZUM VERMESSEN MINDESTENS EINES KONISCHEN GEWINDES**
DEVICE AND METHOD FOR MEASURING AT LEAST ONE CONICAL THREAD
DISPOSITIF ET PROCEDE POUR MESURER AU MOINS UN FILETAGE CONIQUE

(30) Priorität: 05.10.2005 DE 102005047850
(43) Veröffentlichungstag der Anmeldung: 02.07.2008
(73) Patentinhaber: DECOM PRÜFLABOR GmbH&Co. KG, 24376 Kappeln (DE)
(72) Erfinder: LUDWIG, Peter, 24351 Damp (DE)
(74) Vertreter: Schröer, Gernot H.
(86) Internationale Anmeldenummer: PCT/EP2006/009655
(87) Internationale Veröffentlichungsnummer: WO 2007/039304

(56) Entgegenhaltungen:
- DE-A- 3 322 128

## Beschreibung

Die Erfindung betrifft eine Vorrichtung zum Vermessen mindestens eines konischen Gewindes, insbesondere einer Gewindeschachtel oder eines Gewindenippels einer Elektrode einer schmelzmetallurgischen Anlage. Des Weiteren betrifft die Erfindung ein Verfahren zum Vermessen mindestens eines konischen Gewindes, insbesondere einer Gewindeschachtel oder eines Gewindenippels einer Elektrode einer schmelzmetallurgischen Anlage.

Bei schmelzmetallurgischen Anlagen, insbesondere bei Elektroschmelzöfen bzw. Lichtbogenöfen, werden Elektroden eingesetzt, die meist aus gesintertem Kohlenstoff (Graphit) mit Pech bestehen. Dabei werden gehrere derartige Elektroden in Achsrichtung zusammengesetzt und nacheinander in den Ofen eingeführt. Nach dem Verbrauch bzw. dem Verschleiß einer Elektrode werden die sich anschließenden Elektroden über eine Schraubverbindung mit einer Gewindeschachtel und einem Gewindenippel verbunden und der entstehende Elektrodenverbund in Achsrichtung in den Ofen nachgeführt. In einem derartigen Elektrodenstapel sind typischerweise zwei bis drei Elektroden zusammengefügt. Eine derartige Lösung ist in der DD 216 835 A5, in der DE 33 22 128 A1, in der DE 31 16 221 A1 und in der DE 198 50 735 C1 beschrieben.

Beim Zusammenfügen mehrerer Elektroden durch die genannte Schraubverbindung mittels Gewindeschachtel und Gewindenippel ist es sehr wichtig, dass sowohl an den Kontaktflächen im konischen Gewinde als auch an den planen Kontaktflächen um das Gewinde herum ein möglichst großer Kontakt bewerkstelligt wird, über den der Strom von einer Elektrode zur nächsten geführt wird. Ist die Schraubenverbindung nicht mit hinreichender Präzision ausgeführt und die Anbindung zweier Elektroden daher geometrisch mangelhaft, können erhebliche Schäden durch Erosion entstehen.

Deshalb ist eine hohe Maßgenauigkeit bei der Gewindeverbindung erforderlich, d.h. sowohl das Außengewinde des Gewindenippels als auch das Innengewinde der Gewindeschachtel müssen hohen geometrischen Anforderungen entsprechen und die Gewinde möglichst nahe an ihrer Idealform liegen.

Zur Prüfung hinreichender geometrischer Genauigkeit eines Gewindenippels bzw. einer Gewindeschachtel sind Lösungen bekannt, wie sie beispielsweise in der DIN EN 60239 oder in der japanischen Norm JIS R 7202 (Japanese Industrial Standard) beschrieben sind. Beim Prüfen des Gewindes mit diesen vorbekannten Verfahren werden zwei scheibenförmige Lehrengewindeteile mit unterschiedlichem Durchmesser auf oder in das zu vermessende Gewinde eingeschraubt und der sich zwischen den beiden Lehrengewindeteilen ergebende axiale Abstand mittels einer Messuhr gemessen. Auf Grund der Soll-Geometrie des Außen- bzw. des Innengewindes des Gewindenippels bzw. der Gewindeschachtel ist ein ideales Maß für den axialen Abstand der beiden Lehrengewindeteile gegeben, so dass durch Messung des tatsächlichen Abstandes ein Rückschluss darauf möglich ist, ob die konischen Gewinde von Gewindenippel bzw. Gewindeschachtel hinreichende Genauigkeit aufweisen.

In nachteiliger Weise ist das in den genannten Normen beschriebene Verfahren zum Vermessen des konischen Gewindes relativ aufwendig. In der Praxis wirft dies insbesondere dann Probleme auf, wenn gering qualifiziertes Personal beim Herstellen der Gewinde Prüfungen durchführen muss.

Der Erfindung liegt daher die Aufgabe zugrunde, eine Vorrichtung zum Vermessen eines konischen Gewindes, insbesondere einer Gewindeschachtel oder eines Gewindenippels einer Elektrode einer schmelzmetallurgischen Anlage, sowie ein zugehöriges Verfahren zum Vermessen der Gewinde zu schaffen, mit der bzw. mit dem es möglich ist, in einfacherer Weise eine Prüfung der Gewinde von Gewindeschachtel und Gewindenippel vorzunehmen. Vorrichtung und Verfahren sollen möglichst einfach, auch unter rauen Umweltbedingungen, arbeiten und einfach verständlich sein, damit in der Fertigung auch Mitarbeiter mit geringer Qualifikation die Prüfung zuverlässig bewerkstelligen können.

Die Lösung dieser Aufgabe durch die Erfindung ist hinsichtlich der Vorrichtung dadurch gekennzeichnet, dass sie ein erstes und ein zweites Lehrengewindeteil aufweist, die auf oder in das zu vermessende Gewinde auf- oder einschraubbar sind und die voneinander verschiedene Gewindedurchmesser aufweisen, wobei Mittel vorgesehen sind, mit denen die relative Drehlage zwischen beiden Lehrengewindeteilen und die Abweichung der relativen Drehlage von einer Solldrehlage ermittelt werden kann.

Dabei können die beiden Lehrengewindeteile zur Vermessung des Außengewindes eines Gewindenippels als Ringscheiben mit einem konischen Innengewinde ausgebildet sein. Bei der Vermessung des Innengewindes einer Gewindeschachtel können die beiden Lehrengewindeteile als Ringscheiben mit einem konischen Außengewinde ausgebildet sein.

Eines der Lehrengewindeteile kann mit einer Achse verbunden sein, die das andere Lehrengewindeteil koaxial durchsetzt. Dabei ist bevorzugt vor- , gesehen, dass die Achse an dem Lehrengewindeteil mit dem geringeren Gewindedurchmesser angeordnet ist. Weiterhin kann die Achse am Lehrengewindeteil mittels einer Schraubverbindung in einer einstellbaren relativen Drehlage fixierbar sein.

Eine Fortbildung sieht vor, dass an einem der beiden Lehrengewindeteile oder an einem mit diesen verbundenen Bauteil eine Skalenscheibe und an dem anderen der beiden Lehrengewindeteile oder an einem mit diesem verbundenen Bauteil ein Zeiger angeordnet ist, wobei der Zeiger auf der Skalenscheibe eine relative Drehlage der beiden Lehrengewindeteile anzeigt.

Beide Lehrengewindeteile können mit je einer Achse drehfest verbunden sein, wobei die eine Achse die andere, als Hohlwelle ausgebildete Achse axial durchsetzt. Dabei ist bevorzugt vorgesehen, dass an einem axialen Ende der beiden Achsen Handgriffe oder Griffabschnitte zum Handhaben und/oder Ein- oder Aufschrauben der Lehrengewindeteile angeordnet sind. Ferner kann eine Stirnseite der Handgriffe oder Griffabschnitte in der idealen Solllage der beiden Lehrengewindeteile relativ zueinander axial fluchten.

Mit Vorteil ist vorgesehen, dass die axiale Erstreckung der beiden Lehrengewindeteile maximal 30 mm beträgt, womit Probleme mit thermischen Ausdehnungen verhindert werden.

Der ein- und/oder auslaufende Abschnitt des Gewindestegs des Lehrengewindeteils kann gegenüber der theoretischen Sollform zurückgesetzt sein, um die Gefahr von Beschädigungen oder Unfällen möglichst zu vermeiden.

Zusätzlich Messmittel zur Messung des axialen Abstands der beiden Lehrengewindeteile können ebenfalls vorhanden sein. Bei den zusätzlichen Messmitteln handelt es sich bevorzugt um eine Messuhr.

Die Lehrengewindeteile können zum Auf- oder Einschrauben auf oder in ein einziges konisches Gewinde ausgebildet sein. Genauso ist es aber auch möglich, dass die Lehrengewindeteile zum Auf- oder Einschrauben auf oder in zwei mit unterschiedlicher Orientierung aneinander grenzender konischer Gewinde ausgebildet sind.

Als Material für die beiden Lehrengewindeteile, vorzugsweise für die gesamte Vorrichtung, kann Aluminium, Stahl oder kohlenfaserverstärkter Kunststoff vorgesehen werden.

Das erfindungsgemäße Verfahren zum Vermessen mindestens eines konischen Gewindes, insbesondere einer Gewindeschachtel oder eines Gewindenippels einer Elektrode einer schmelzmetallurgischen Anlage, weist folgende Schritte auf:
a) Auf- oder Einschrauben eines ersten Lehrengewindeteils auf oder in das zu vermessende Gewinde mit einem ersten Gewindedurchmesser;
b) Auf- oder Einschrauben eines zweiten Lehrengewindeteils auf oder in das zu vermessende Gewinde mit einem zweiten, vom ersten Gewindedurchmesser abweichenden Gewindedurchmesser;
c) Ermitteln der relativen Drehlage zwischen erstem und zweitem Lehrengewindeteil und Feststellen der Abweichung der ermittelten relativen Drehlage zu einer Solldrehlage.

Das Auf- oder Einschrauben der Lehrengewindeteile auf das zu vermessende Gewinde erfolgt dabei bevorzugt jeweils mit einem vorgegebenem und definierten Drehmoment.

Vorzugsweise wird vor der Durchführung des Schritts a) eine Kalibrierung der Solldrehlage der beiden Lehrengewindeteile bei Anbringung dieser an ein Lehrengewinde durchgeführt. Dies erfolgt insbesondere so, dass die Kalibrierung so durchgeführt wird, dass beide Lehrengewindeteile zueinander in einer vorgegebenen Nullstellung sind.

Ein Verfahren zum Herstellen einer Gewindenippel-Lehre mit einem konischen Gewinde sieht erfindungsgemäß vor, dass die Gewindenippel-Lehre aus mindestens zwei separat gefertigten Teilen zusammengesetzt wird.

Mit Vorteil ist dabei vorgesehen, dass die Gewindenippel-Lehre aus genau zwei separat gefertigten Teilen zusammengesetzt wird. Weiterhin kann das konische Gewinde mittels eines Drehvorgangs und gegebenenfalls durch einen sich anschließenden Feinbearbeitungsvorgang erzeugt werden.

Mit der vorgeschlagenen Vorrichtung und dem zugehörigen Verfahren wird es möglich, in besonders einfacher Weise die konischen Gewinde einer Gewindeschachtel bzw. eines Gewindenippels zu vermessen. Mit wenigen Handgriffen kann die vorgeschlagene Vorrichtung angelegt und sofort abgelesen werden, ob sich die Genauigkeit des konischen Gewindes innerhalb einer vorgegebenen Toleranz befindet und somit eingesetzt werden kann.

In der Zeichnung sind Ausführungsbeispiele der Erfindung dargestellt. Es zeigen:
- FIG 1: schematisch die geschnittene Seitenansicht einer Gewinde- schachtel für eine Elektrode mit angebrachter Vorrichtung zum Vermessen des konischen Gewindes der Gewinde- schachtel,
- FIG 2: einen Teil der Anordnung gemäß FIG 1, aus Richtung A ge- sehen,
- FIG 3: einen Ausschnitt der Vorrichtung in der Darstellung gemäß FIG 1 in vergrößerter Ansicht,
- FIG 4: die Ansicht B gemäß FIG 3,
- FIG 5: eine Gewindeschachtel-Masterlehre in der geschnitten darge- stellten Seitenansicht,
- FIG 6: die Gewindeschachtel-Masterlehre in der Ansicht C gemäß FIG 5,
- FIG 7: die Einzelheit Z gemäß FIG 5,
- FIG 8: die Gewindeschachtel-Masterlehre gemäß den FIG 5 bis 7 in perspektivischer Ansicht mit einem stirnseitig anzubringen- den Distanzring,
- FIG 9: eine Gewindenippel-Masterlehre in der geschnitten darge- stellten Seitenansicht,
- FIG 10: eine Gewindenippel-Masterlehre, bestehend aus zwei ver- bundenen Teil-Lehren eines Gewindenippels,
- FIG 11.: ein großes Nippellehrengewindeteil zum Aufschrauben auf das in FIG 10 dargestellte rechte Gewindenippel-Lehrenteil bzw. auf einen zu vermessenden Gewindenippel in der Vor- deransicht,
- FIG 12: das Lehrengewindeteil gemäß FIG 11 in der geschnittenen Seitenansicht,
- FIG 13: ein kleines Nippellehrengewindeteil zum Aufschrauben auf das in FIG 10 dargestellte rechte Gewindenippel-Lehrenteil bzw. auf einen zu vermessenden Gewindenippel in der Vor- deransicht,
- FIG 14: das Lehrengewindeteil gemäß FIG 13 in der geschnittenen Seitenansicht,
- FIG 15: ein großes Nippellehrengewindeteil zum Aufschrauben auf das in FIG 10 dargestellte linke Gewindenippel-Lehrenteil bzw. auf einen zu vermessenden Gewindenippel in der Vor- deransicht,
- FIG 16: das Lehrengewindeteil gemäß FIG 15 in der geschnittenen Seitenansicht,
- FIG 17: ein großes Schachtellehrengewindeteil zum Einschrauben in das in FIG 8 dargestellte Gewindeschachtel-Masterlehrenteil bzw. in eine zu vermessende Gewindeschachtel in der Vor- deransicht,
- FIG 18: das Lelirengewindeteil gemäß FIG 17 in der geschnittenen Seitenansicht,
- FIG 19: ein kleines Schachtellehrengewindeteil zum Einschrauben in das in FIG 8 dargestellte Gewindeschachtel-Lehrenteil bzw. in eine zu vermessende Gewindeschachtel in der Vorderan- sicht,
- FIG 20: das Lehrengewindeteil gemäß FIG 19 in der geschnittenen Seitenansicht,
- FIG 21: ein Lehrengewindeteil zum Einschrauben in das in FIG 8 dargestellte Gewindeschachtel-Lehrenteil bzw. in eine zu vermessende Gewindeschachtel samt der mit diesem verbun- denen Achse in Explosionsdarstellung und
- FIG 22: die teilweise geschnitten dargestellte Seitenansicht einer zu vermessenden Gewindeschachtel samt Vorrichtung zum Ver- messen deren Gewinde (Schachtellehren).

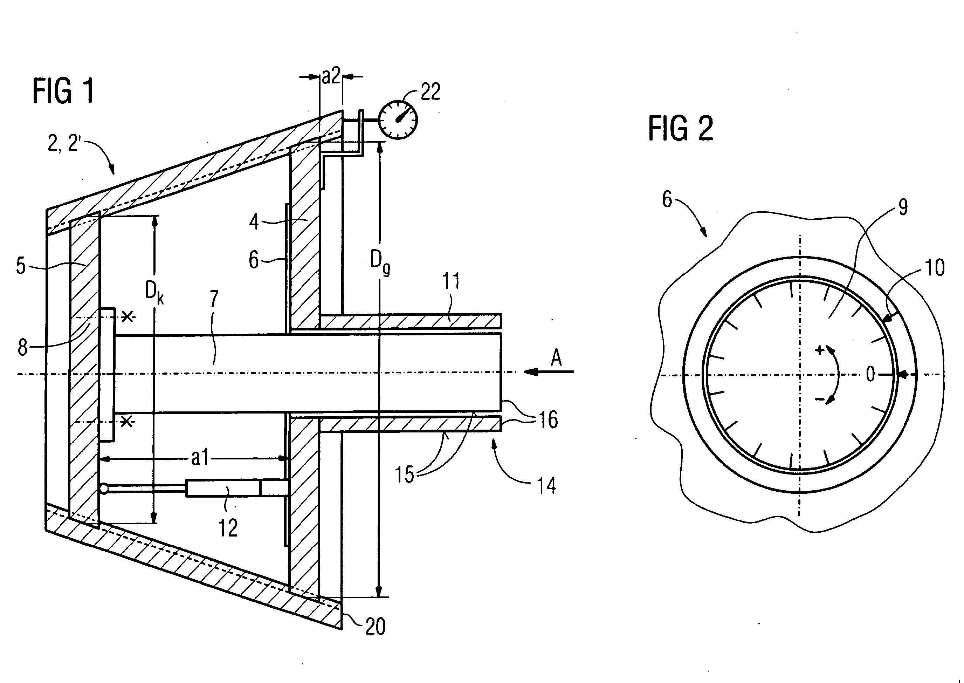

In den FIG 1 und 2 ist schematisch eine Gewindeschachtel 2 dargestellt, bei der es sich auch - wie später noch gesehen werden wird - um eine Gewindeschachtel-Lehre 2' handeln kann. Die Gewindeschachtel 2 weist ein konisches Innengewinde 1 auf, dass, wie oben erläutert, relativ hohen Anforderungen hinsichtlich seiner geometrischen Ausbildung unterliegt.

Zur Vermessung des konischen Gewindes 1 wird eine Vorrichtung eingesetzt, die zunächst aus zwei Lehrengewindeteilen 4 und 5 besteht. Das erste Lehrengewindeteil 4 weist einen ersten Gewindedurchmesser, nämlich den großen Gewindedurchmesser D_{g}, auf, so dass das Lehrengewindeteil 4 in den rechten Endbereich der Gewindeschachtel 2 eingeschraubt werden kann. Dem gegenüber weist ein zweites Lehrengewindeteil 5 einen zweiten, kleineren Gewindedurchmesser auf, nämlich den Gewindedurchmesser Dₖ. Damit kann das zweite Lehrengewindeteil 5 in den linken Endbereich des Gewindes der Gewindeschachtel 2 eingeschraubt werden.

Die beiden Lehrengewindeteile 4, 5 sind mit Mitteln 6 zur Ermittlung der relativen Drehlage beider Teile 4, 5 ausgestattet. Hierbei handelt es sich zunächst um eine Achse 7 in Form eines Wellenteils, das mit dem zweiten Lehrengewindeteil 5 mittels einer Schraubverbindung 8 drehfest verbunden ist. Die Achse 7 erstreckt sich einseitig im eingeschraubten Zustand aus der Gewindeschachtel 2 heraus.

Das erste Lehrengewindeteil 4 ist mit einer Achse 11 drehfest verbunden, wobei letztere als Hohlwelle ausgeführt ist. Wie FIG 1 entnommen werden kann, durchsetzt die Achse 7 die Achse 8 axial und zwar in der Weise, dass in eingeschraubtem Zustand beider Lehrengewindeteile 4, 5 die Stirnseiten 16 beider Achsen 7, 11 im Bereich des axialen Endes 14 weitgehend fluchten.

Die Achse 7 ist im Bereich des ersten Lehrengewindeteils 4 mit einer Skalenscheibe 9 ausgestattet (siehe FIG 2). Die Achse 11 weist in diesem Bereich einen Zeiger 10 auf.

Liegt ein ideal gefertigtes konisches Gewinde 1 vor, handelt es sich bei der Gewindeschachtel 2 namentlich um eine Gewindeschachtel-Lehre 2', fluchten nicht nur die beiden Stirnseiten 16 der beiden Achsen 7 und 11 axial, sondern der Zeiger 10 zeigt bei eingeschraubten Lehrengewindeteilen 4, 5 exakt auf eine Nullmarke der Skalenscheibe 9.

Wird die Vorrichtung in eine zu vermessende Gewindeschachtel 2 eingeschraubt, wird sich in Folge von Ungenauigkeiten des konischen Gewindes 1 nicht dieser Idealzustand einstellen. Vielmehr wird es, wie es in FIG 2 angedeutet ist, zu einer Konstellation kommen, bei der der Zeiger 10 nicht die Nullmarke, sondern einen gewissen Differenzwinkel auf der Skalenscheibe 9 anzeigt. Aus der Größe des durch den Zeiger 10 angezeigten Fehlerwinkels kann sofort ein Rückschluss darauf gezogen werden, ob das konische Gewinde 1 noch eine hinreichende Genauigkeit aufweist und so die Gewindeschachtel eingesetzt werden kann oder ob es sich bei dieser um ein Ausschussteil handelt. Hierzu wird ein definierter Toleranzbereich vorgegeben, so dass auch gering qualifiziertes Personal sofort eine Prüfung dahingehend vornehmen kann, ob die geprüfte Gewindeschachtel verwendbar ist oder nicht.

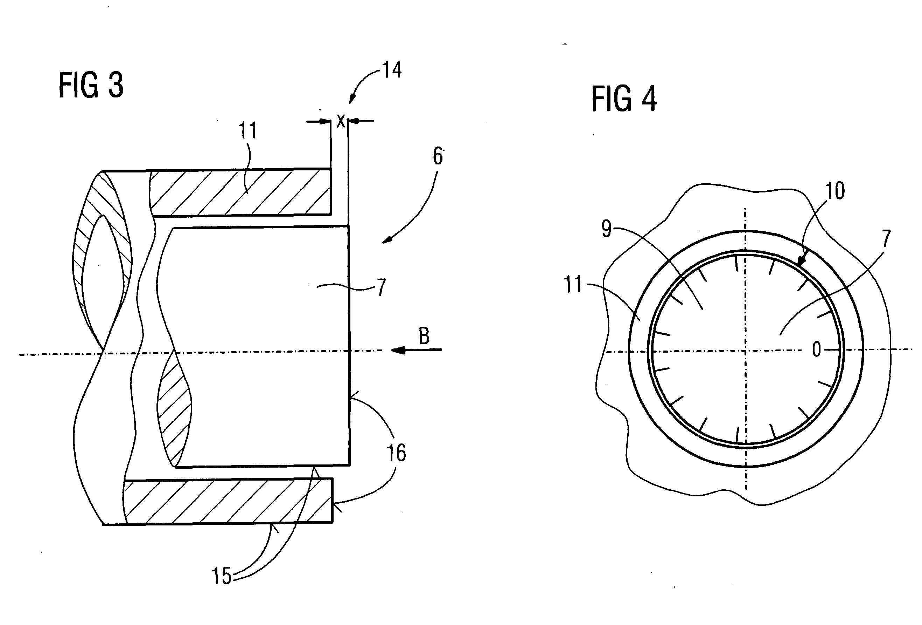

In den FIG 3 und 4 ist vergrößert die Situation dargestellt, die sich beim Vorliegen von Bearbeitungsfehlern des konischen Gewindes zeigt. Während, wie oben erläutert, die Stirnseiten 16 der beiden Achsen 7 und 11 bei einem idealen konischen Gewinde 1 fluchten und der Zeiger 10 auf der Nullmarke der Skalenscheibe 9 zu liegen kommt, ergibt sich in der Praxis zumeist das in den FIG 3 und 4 dargestellte Bild. Hiernach existiert ein axialer Versatz x zwischen den beiden Stirnseiten 16 der Achsen 7 und 11. Gleichzeitig kommt der Zeiger 10 auf einer gewissen Winkelmarkierung der Skalenscheibe 9 zu liegen, womit auf das Maß der Ungenauigkeit des konischen Gewindes 1 geschlossen werden kann.

Falls eine derart große Abweichung in der Genauigkeit des konischen Gewindes 1 von der Idealform vorliegt, dass diese über einen Abweichungswinkel von der Nullmarke über 360° hinausgeht, kommt es zu einer Nicht-Eindeutigkeit beim Ablesen der durch den Zeiger 10 angezeigten Winkelstellung (Periodizität von 360°). Allerdings liegt in diesem Falle auch ein starker axialer Versatz x der beiden Stirnseiten 16 der beiden Achsen 7 und 11 vor, d.h. der axiale Versatz x wird relativ groß und sofort sichtbar und fühlbar. Dadurch kann auch für den Fall auf das Vorliegen dann sogar großer Ungenauigkeiten des konischen Gewindes 1 geschlossen werden, wenn (zufällig) der Zeiger 10 nahe der Nullmarke der Skalenscheibe 9 zu liegen kommt, in Folge der Periodizität der Winkelstellung jedoch eine erhebliche Ungenauigkeit vorliegt.

Wird vor der Benutzung der Vorrichtung diese an Hand einer Gewindeschachtel-Lehre 2' kalibriert, werden beide Lehrengewindeteile 4, 5 mit den sich hieran angebrachten Achsen 7 und 11 in das Gewinde 1 eingeschraubt. Hierzu steht im axialen Endbereich ein Griffabschnitt 15 an beiden Achsen 7 und 11 zur Verfügung, die zum einfachen Eindrehen der Lehrengewindeteilen 4, 5 dienen. Dabei wird zunächst das zweite Lehrengewindeteil 5 mit der sich hieran befindlichen Achse 7 eingeschraubt; ist dies geschehen, wird das erste Lehrengewindeteil 4 mit seiner Achse 11 koaxial auf die Achse 7 aufgesteckt und gleichermaßen mittels des Griffabschnitts 15 eingeschraubt. Im Falle einer Gewindeschachtel-Lehre 2' muss der Zeiger 10 exakt auf die Nullmarke der Skalenscheibe 9 zeigen. Dies kann dadurch eingestellt werden, dass eine Schraubverbindung 8 vorgesehen wird, die eine gewisse Einstellmöglichkeit in Umfangsrichtung zwischen dem Lehrengewindeteil 5 und der Achse 7 ermöglicht.

Zusätzlich kann - wie in FIG 1 angedeutet wurde - ein zusätzliches Messmittel 12 in Form einer Messuhr eingesetzt werden, um den axialen Abstand al zwischen den beiden Lehrengewindeteilen 4 und 5 zu ermitteln. Zusätzlich oder alternativ zu dem Messmittel 12 ist eine Messuhr 22 vorgesehen zum Messen oder Ermitteln des axialen Abstandes a2 zwischen dem Lehrgewindeteil 4 und der als Messfläche oder Messebene dienenden Oberfläche 20 des Körpers, in dem das zu vermessende Gewinde ausgebildet ist.

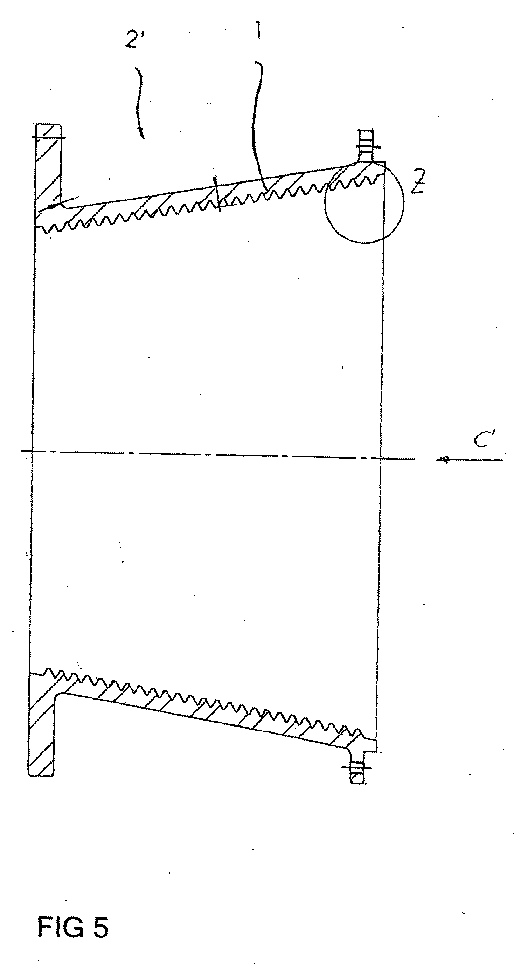

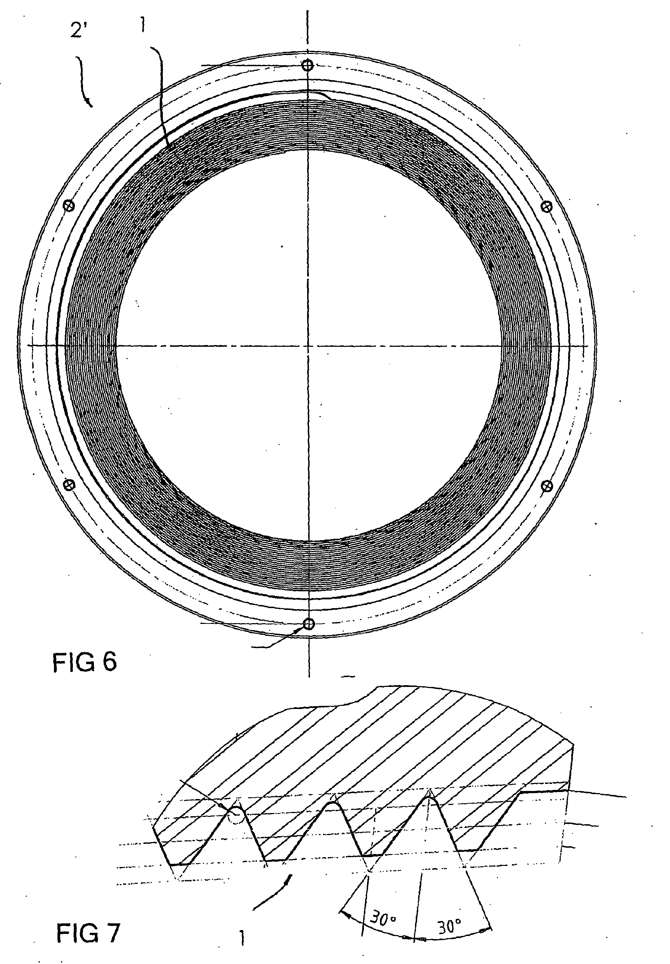

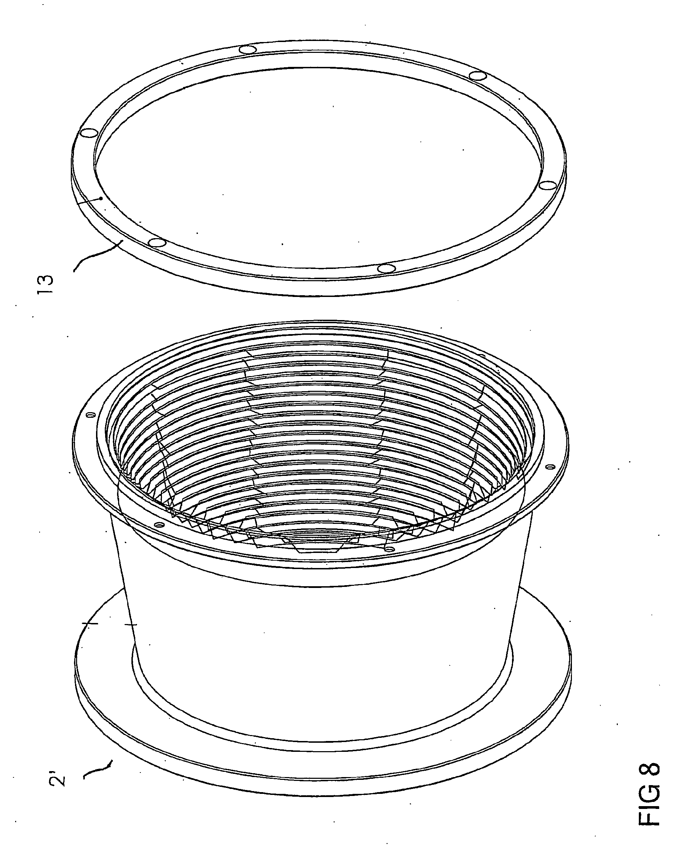

In FIG 5 ist eine Gewindeschachtel-Lehre 2' im Schnitt dargestellt und in FIG 6 die entsprechende Vorderansicht. Wie aus FIG 7 hervorgeht, handelt es sich bei dem konischen Gewinde 1 der Gewindeschachtel-Lehre 2' um ein API ähnliches Gewinde. Aus FIG 8 ergibt sich eine perspektivische Darstellung der Gewindeschachtel-Lehre 2', wobei zur exakten Definition einer axialen Anlagefläche (Messebene) ein Distanzring 13 stirnseitig angeschraubt werden kann.

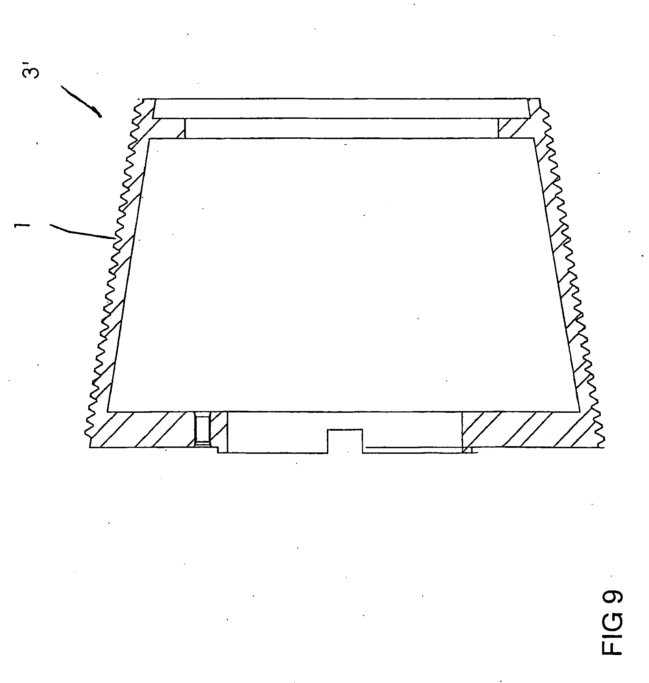

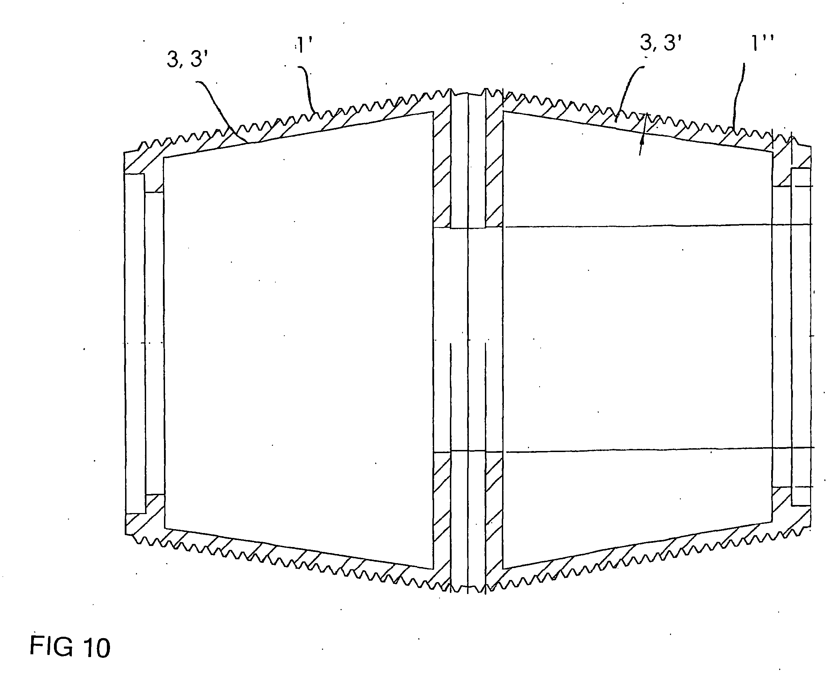

Eine Gewindenippel-Lehre 3' geht aus FIG 9 im Radialschnitt hervor. Hier liegt ein konisches Außengewinde 1 vor. Zwei derartige Gewindenippel-Lehren 3' können - wie FIG 10 zeigt - so zusammengesetzt werden, dass sich eine klassische Form eines Gewindenippels ergibt, wie er in vorbekannter Weise zum Verbinden zweier Elektroden eines Elektroschmelzofens eingesetzt wird.

Es sei angemerkt, dass die genannten Gewindeschachtel-Lehren 2' bzw. Gewindenippel-Lehren 3' quasi eine geometrische Idealform der zu fertigenden und zu vermessenden Gewindeschachteln 2 bzw. Gewindenippeln 3 darstellen.

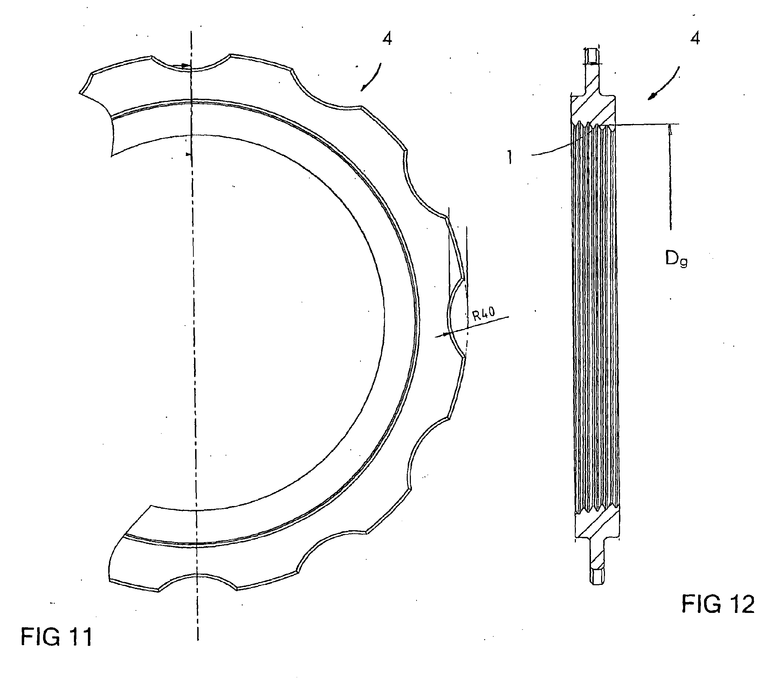

Die FIG 11 bis 20 zeigen Lehrengewindeteile 4, 5 in verschiedener Ausgestaltung zum Einsatz an Gewindeschachteln und Gewindenippeln.

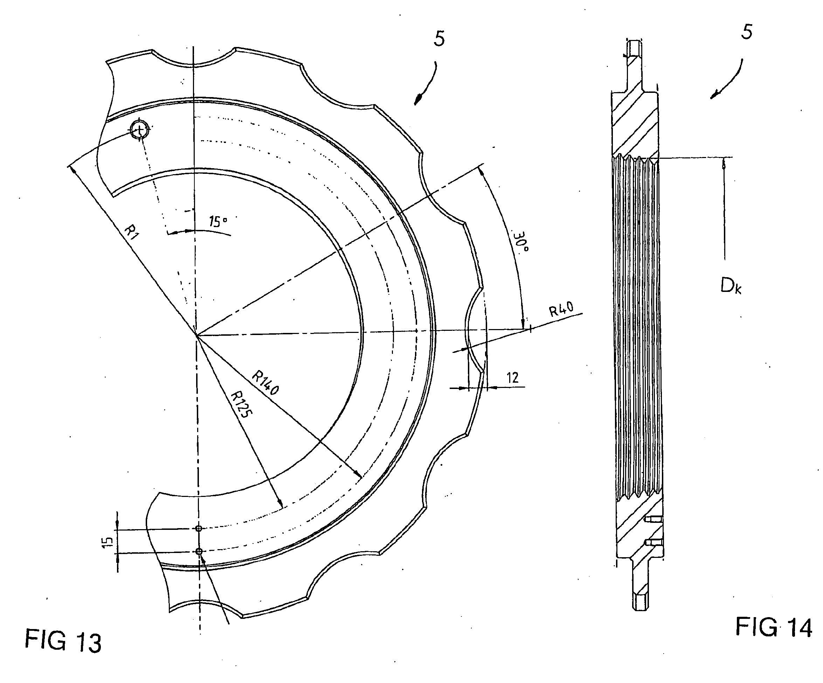

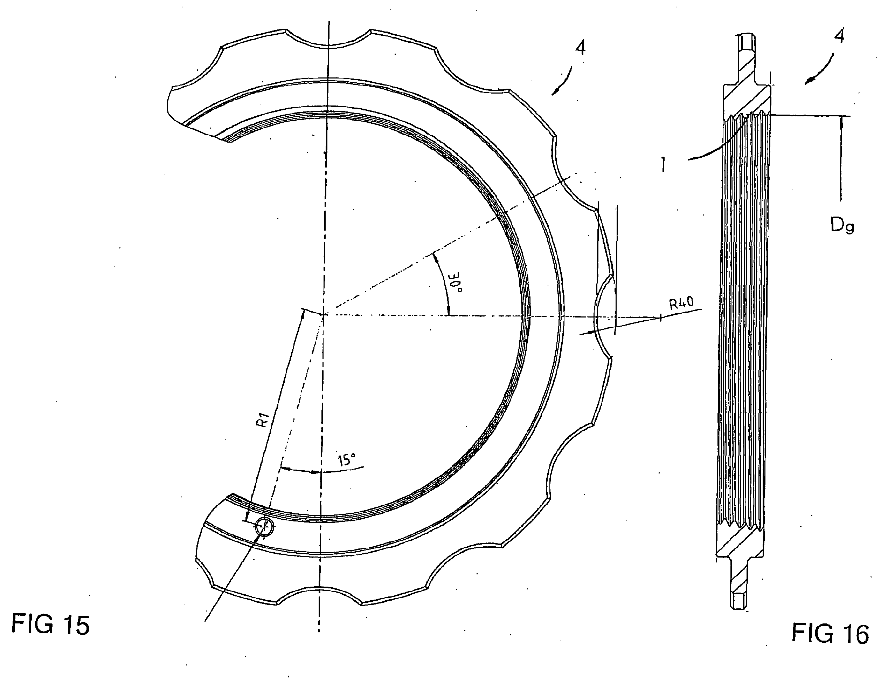

Die FIG 11 und 12 zeigen ein Lehrengewindeteil 4 zum Aufschrauben auf das in FIG 10 dargestellte rechte Gewindenippel-Lehrenteil 3' bzw. auf einen zu vermessenden Gewindenippel 3. Das Lehrengewindeteil 4 weist ein konisches Innengewinde 1 mit großem Gewindedurchmesser D_{g} auf. Entsprechend ist in den FIG 13 und 14 ein zugehöriges zweites Lehrengewindeteil 5 zu sehen, das grundsätzlich genauso wie dasjenige gemäß der FIG 11 und 12 ausgebildet ist, hier jedoch einen kleinen Gewindedurchmesser Dₖ aufweist. Das Gewindelehrenteil 4 gemäß FIG 15 und 16 entspricht demjenigen gemäß den FIG 11 und 12, wobei die Konizität des Gewindes 1 lediglich anders orientiert ist und das Gewindelehrenteil 4 somit zum Aufschrauben auf das in FIG 10 dargestellte linke Gewindenippel-Lehrenteil bzw. auf einen entsprechenden zu vermessenden Gewindenippel vorgesehen ist.

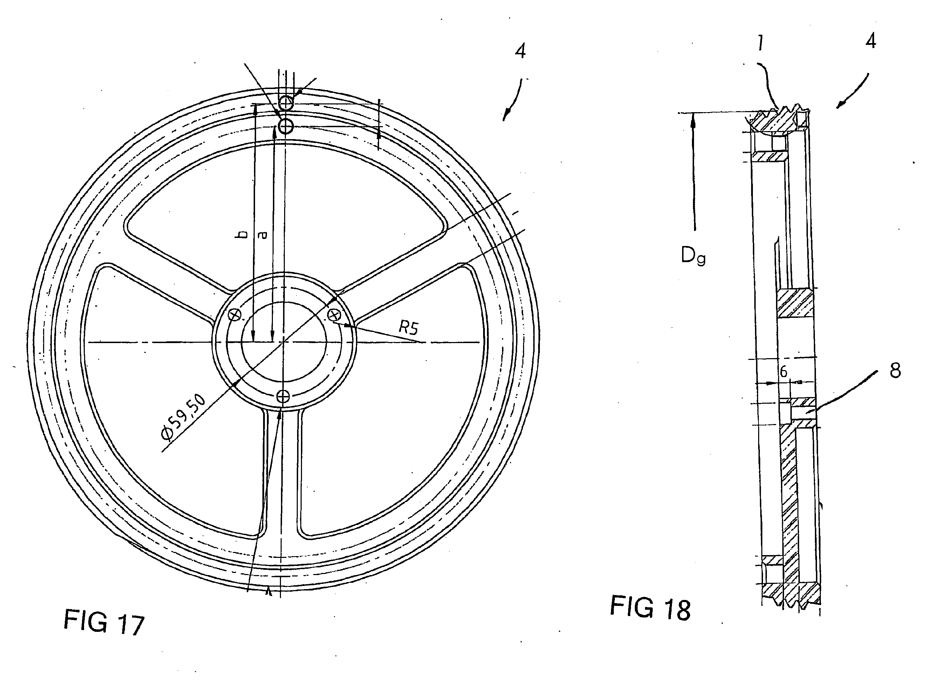

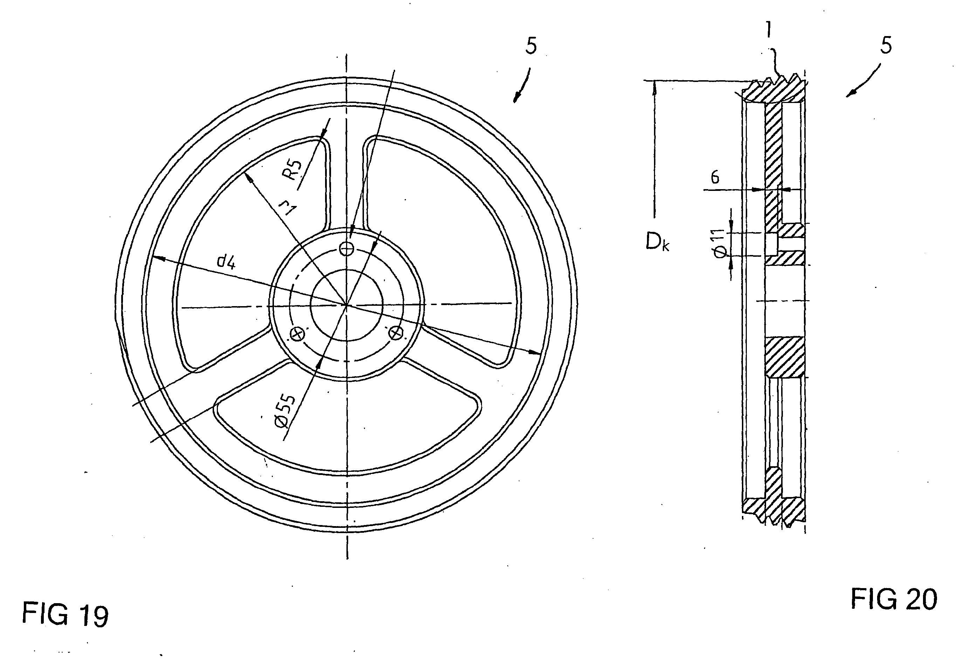

Die FIG 17 und 18 zeigen ein erstes Lehrengewindeteil 4 mit großem Gewindedurchmesser D_{g} zum Einschrauben in eine Gewindeschachtel 2. Das Lehrengewindeteil 5 gemäß den FIG 19 und 20 wird ebenfalls in eine Gewindeschachtel 2 eingeschraubt, weist hier jedoch den kleineren Gewindedurchmesser Dₖ auf. Beide Lehrengewindeteile 4, 5 gemäß den FIG 17 bis 20 weisen also ein Außengewinde 1 auf, um in eine Gewindeschachtel 2 eingeschraubt werden zu können.

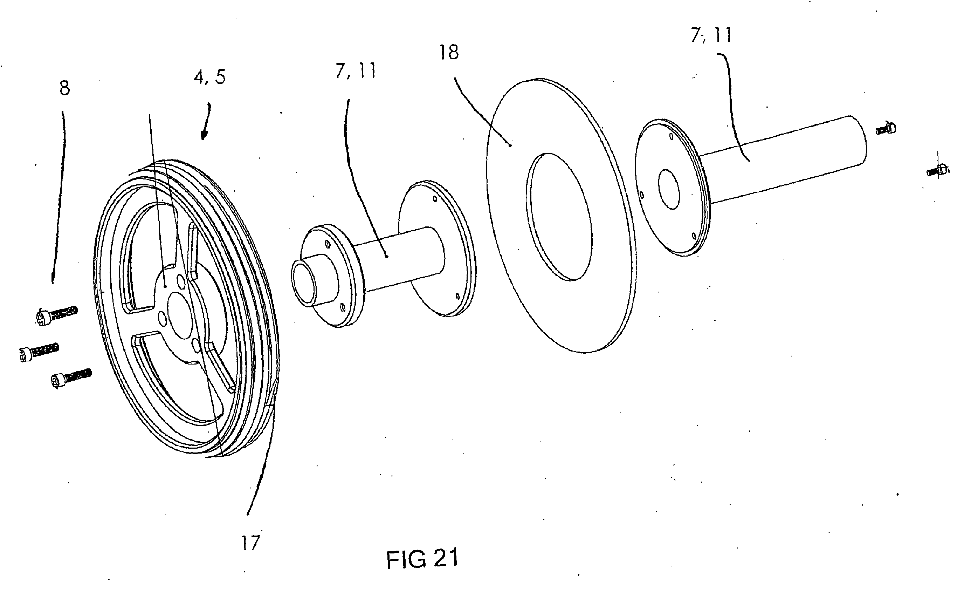

FIG 21 zeigt in Explosionsdarstellung verschiedene Teile eines Teils der Messvorrichtung, wobei das Lehrengewindeteil 4 bzw. 5 zu sehen ist, das mittels einer Schraubverbindung 8 mit der Achse 7, 11 verbunden ist. Wie zu erkennen ist, ist eine Scheibe 18 in die Achse 7 integriert, die eine axiale Anlagefläche definiert.

Die axiale Länge der Lehrengewindeteile 4, 5 wird möglichst klein gewählt, beispielsweise wird sie auf maximal 30 mm beschränkt. Weiterhin kann der Gewindesteg 17 des konischen Gewindes 1 der Lehrengewindeteile 4, 5 teilweise weggearbeitet sein, um Beschädigungen von Gewindeeinlauf und Gewindeauslauf und Verletzungen bei der Handhabung zu verhindern.

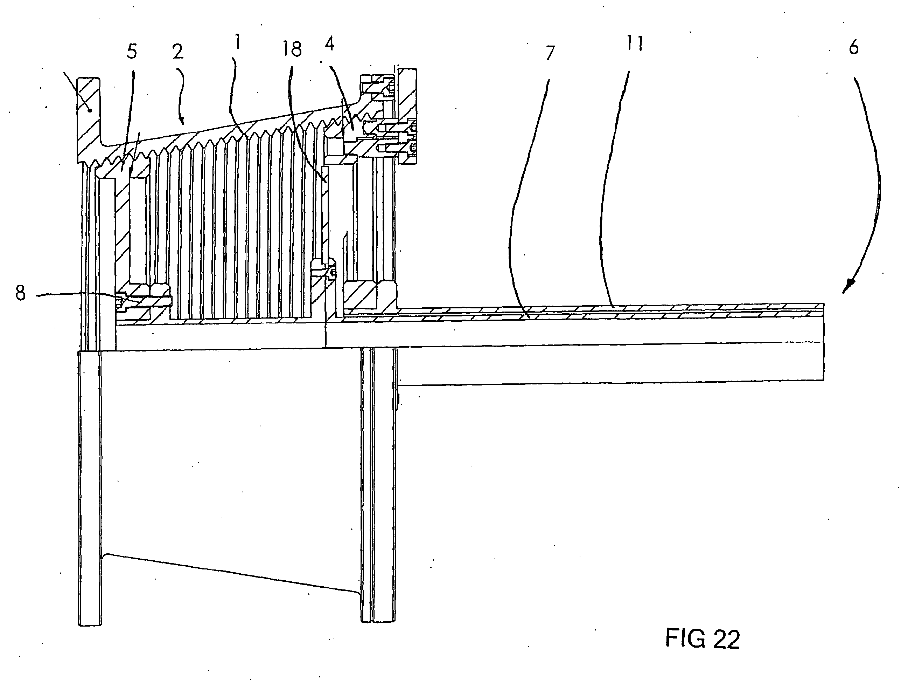

Aus FIG 22 geht noch einmal der Gesamtaufbau hervor, wenn die Vorrichtung zum Vermessen des konischen Gewindes 1 in eine Gewindeschachtel 2 eingeschraubt ist.

Gemäß der vorliegenden Erfindung werden zum Vermessen des konischen Gewindes der Gewindeschachtel bzw. des Gewindenippels also wie im Stand der Technik zwei Lehrengewindeteile 4, 5 bzw. Gewindelehrdorne eingesetzt, wobei jedoch ein Drehwinkel als Differenzwinkel zwischen diesen beiden Lehrengewindeteilen ermittelt wird, um auf die Qualität des zu vermessenden konischen Gewindes zu schließen. Liegt eine Abweichung der relativen Drehlage der beiden Lehrengewindeteile 4, 5 zueinander vor, d. h. zeigt der Zeiger 10 nicht auf die Nullmarke der Skalenscheibe 9, liegt folglich eine entsprechende Abweichung des konischen Gewindes 1 von der Idealform vor. Der Differenzwinkel steht in direktem Zusammenhang mit dem Kegelwinkel des konischen Gewindes 1. Somit kann (mittelbar) gemessen werden, wie es um die Genauigkeit des Kegelwinkels des konischen Gewindes 1 bestellt ist.

Die Kalibrierung der Messvorrichtung erfolgt - wie erläutert - vor der eigentlichen Benutzung der Vorrichtung an einer Gewindeschachtel-Lehre bzw. an einer Gewindenippel-Lehre, die fertigungstechnisch mit höchster Präzision hergestellt werden und sehr genau vermessen sind. Dabei kommen beispielsweise optische dreidimensionale Abtastverfahren zum Einsatz oder auch ein Messen mittels mechanischer Abtastung durch in dem Gewindegang laufende Kugeln. Wie erläutert, werden bei in die Lehren eingeschraubten Lehrengewinde-Teilen 4, 5 die beiden Achsen 7, 11 so justiert, dass der Zeiger 10 auf der Nulllinie der Skalenscheibe 9 zu liegen kommt. Dazu erlaubt die Schraubverbindung 8 eine drehfeste Verbindung zwischen Lehrengewindeteil 5 und Achse 7 in jeder beliebigen Winkelstellung. Beide Lehrengewindeteile 4, 5 haben dabei die gleiche Konizität.

Als Material für die Vorrichtungsteile, insbesondere für die Lehrengewindeteile, kann ein Metall, insbesondere Aluminium oder Stahl, gewählt werden. Aluminium hat allerdings einen gewissen Nachteil, da sein thermischer Ausdehnungskoeffizient viel größer ist als bei dem Kohlenstoff oder Graphit der Elektrode. Deshalb ist auch ein kohlenfaserverstärkter Kunststoff vorteilhaft, der im wesentlichen den gleichen Ausdehnungskoeffizienten hat wie das Graphit.

Bei einem zu vermessenden Gewindenippel wird durch Messen des Abstandes der beiden Lehrengewindeteile 4, 5 der Abstand der beiden konischen Hälften des Nippels bestimmt (s. FIG 10) und damit der Durchmesser oder Flankendurchmesser im Zenit. Der derart bestimmte Differenzdurchmesser entspricht dann zwei Mal der Differenz aus der größeren Länge und der kleineren Länge der beiden Nippelhälften. Die Gewindelängen der beiden Nippelhälften sollen normalerweise gleich sein. Zusätzlich zu dem zu messenden relativen Drehwinkel wird in allen Ausführungen vorzugsweise auch eine Länge oder Tiefe gemessen, wobei insbesondere die erwähnte Messuhr (zusätzliches Messmittel 12 und/oder Messuhr 22) zum Einsatz kommt, wodurch auch der Flankendurchmesser des Gewindes oder Paarungsflankendurchmesser bestimmt werden können.

Um die Gewindenippel-Lehre herzustellen, kann nach einer besonderen Ausführungsform der Erfindung vorgesehen werden, dass diese Lehre aus zwei jeweils mit dem konischen Gewinde versehenen Hälften hergestellt und die Hälften kann miteinander verbunden werden. Dabei ist darauf zu achten, dass ein kontinuierlicher Gewindegang entsteht, die beiden Hälften also entsprechend gegeneinander ausgerichtet werden. Dies kann mit einer mechanischen Abtastung mittels einer Kugel gemessen werden. Im Stand der Technik sind die Gewindenippel-Lehren stets einstückig ausgebildet. Die Gewinde des Nippels werden beispielsweise durch Drehen erzeugt und durch Schleifen nachgearbeitet.

### Bezugszeichenliste

- 1: konisches Gewinde
- 1': konisches Gewinde
- 1": konisches Gewinde
- 2: Gewindeschachtel
- 2': Gewindeschachtel-Lehre
- 3: Gewindenippel
- 3': Gewindenippel-Lehre
- 4: erstes Lehrengewindeteil
- 5: zweites Lehrengewindeteil
- 6: Mittel zur Ermittlung der relativen Drehlage
- 7: Achse
- 8: Schraubverbindung
- 9: Skalenscheibe
- 10: Zeiger
- 11: Achse
- 12: zusätzlich Messmittel (Messuhr)
- 13: Distanzring
- 14: axiales Ende
- 15: Griffabschnitt
- 16: Stirnseite
- 17: Gewindesteg
- 18: Scheibe
- 20: Messfläche
- 22: Messuhr
- D_{g}: großer Gewindedurchmesser
- Dₖ: kleiner Gewindedurchmesser
- a: axialer Abstand
- x: axialer Versatz

## Patentansprüche

1. Vorrichtung zum Vermessen mindestens eines konischen Gewindes (1), insbesondere einer Gewindeschachtel (2) oder eines Gewindenippels (3) einer Elektrode einer schmelzmetallurgischen Anlage,
**dadurch gekennzeichnet,**
**dass** sie ein erstes (4) und ein zweites (5) Lehrengewindeteil aufweist, die auf oder in das zu vermessende Gewinde (1) auf- oder einschraubbar sind und die voneinander verschiedene Gewindedurchmesser (D_{g}, Dₖ) aufweisen, wobei Mittel (6) vorgesehen sind, mit denen die relative Drehlage zwischen beiden Lehrengewindeteilen (4, 5) und die Abweichung der relativen Drehlage von einer Solldrehlage ermittelt werden kann.

2. Vorrichtung nach Anspruch 1, **dadurch gekennzeichnet, dass** die beiden Lehrengewindeteile (4, 5) zur Vermessung des Außengewindes (1) eines Gewindenippels (3) als Ringscheiben mit einem konischen Innengewinde und/ oder mit einem konischen Außengewinde ausgebildet sind.

3. Vorrichtung nach einem der Ansprüche 1 bis 2, **dadurch gekennzeichnet, dass** eines der Lehrengewindeteile (5) mit einer Achse (7) verbunden ist, die das andere Lehrengewindeteil (4) koaxial durchsetzt, wobei vorzugsweise die Achse (7) an dem Lehrengewindeteil (5) mit dem geringeren Gewindedurchmesser (Dₖ) angeordnet ist und / oder wobei vorzugsweise die Achse (7) am Lehrengewindeteil (5) mittels einer Schraubverbindung (8) in einer einstellbaren relativen Drehlage fixierbar ist.

4. Vorrichtung nach einem der Ansprüche 1 bis 3, **dadurch gekennzeichnet, dass** an einem der beiden Lehrengewindeteile (4, 5) oder an einem mit diesen verbundenen Bauteil (7, 11) eine Skalenscheibe (9) und an dem anderen der beiden Lehrengewindeteile (4, 5) oder an einem mit diesem verbundenen Bauteil (7, 11) ein Zeiger (10) angeordnet ist, wobei der Zeiger (10) auf der Skalenscheibe (9) eine relative Drehlage der beiden Lehrengewindeteile (4, 5) anzeigt.

5. Vorrichtung nach einem der Ansprüche 1 bis 4, **dadurch gekennzeichnet, dass** beide Lehrengewindeteile (4, 5) mit je einer Achse (7, 11) drehfest verbunden sind, wobei die eine Achse (7) die andere, als Hohlwelle ausgebildete Achse (11) axial durchsetzt, wobei vorzugsweise an einem axialen Ende (14) der beiden Achsen (7, 11) Handgriffe oder Griffabschnitte (15) zum Handhaben und/oder Ein- oder Aufschrauben der Lehrengewindeteile (4, 5) angeordnet sind, wobei insbesondere eine Stirnseite (16) der Handgriffe oder Griffabschnitte (15) in der idealen Solllage der beiden Lehrengewindeteile (4, 5) relativ zueinander axial fluchten.

6. Vorrichtung nach einem der Ansprüche 1 bis 5, **dadurch gekennzeichnet, dass** die axiale Erstreckung der beiden Lehrengewindeteile (4, 5) maximal 30 mm beträgt und/oder **dadurch gekennzeichnet, dass** der ein- und/oder auslaufende Abschnitt des Gewindestegs (17) des Lehrengewindeteils (4, 5) gegenüber der theoretischen Sollform zurückgesetzt ist.

7. Vorrichtung nach einem der Ansprüche 1 bis 6, **dadurch gekennzeichnet, dass** zusätzlich Messmittel (12), insbesondere eine Messuhr, zur Messung des axialen Abstands (a) der beiden Lehrengewindeteile (4, 5) vorhanden sind.

8. Vorrichtung nach einem der Ansprüche 1 bis 7, **dadurch gekennzeichnet, dass** die Lehrengewindeteile (4, 5) zum Auf- oder Einschrauben auf oder in ein einziges konisches Gewinde (1) ausgebildet sind oder zum Auf- oder Einschrauben auf oder in zwei mit unterschiedlicher Orientierung aneinander grenzender konischer Gewinde (1', 1 ") ausgebildet sind.

9. Vorrichtung nach einem der Ansprüche 1 bis 8, **dadurch gekennzeichnet, dass** zumindest die beiden Lehrengewindeteile (4, 5), vorzugsweise die gesamte Vorrichtung, aus Aluminium bestehen bzw. besteht oder dass zumindest die beiden Lehrengewindeteile (4, 5), vorzugsweise die gesamte Vorrichtung, aus Stahl bestehen bzw. besteht oder dass zumindest die beiden Lehrengewindeteile (4, 5), vorzugsweise die gesamte Vorrichtung, aus kohlenfaserverstärktem Kunststoff bestehen bzw. besteht.

10. Verfahren zum Vermessen mindestens eines konischen Gewindes (1), insbesondere einer Gewindeschachtel oder eines Gewindenippels einer Elektrode einer schmelzmetallurgischen Anlage, das die Schritte aufweist:
a) Auf- oder Einschrauben eines ersten Lehrengewindeteils (5) auf oder in das zu vermessende Gewinde (1) mit einem ersten Gewindedurchmesser (Dₖ);
b) Auf- oder Einschrauben eines zweiten Lehrengewindeteils (4) auf oder in das zu vermessende Gewinde (1) mit einem zweiten, vom ersten Gewindedurchmesser (Dₖ) abweichenden Gewindedurchmesser (D_{g};
c) Ermitteln der relativen Drehlage zwischen erstem und zweitem Lehrengewindeteil (4, 5) und Feststellen der Abweichung der ermittelten relativen Drehlage zu einer Solldrehlage.

11. Verfahren nach Anspruch 10, **dadurch gekennzeichnet, dass** vor der Durchführung des Schritts a) gemäß Anspruch 20 eine Kalibrierung der Solldrehlage der beiden Lehrengewindeteile (4, 5) bei Anbringung dieser an ein Lehrengewinde erfolgt.

12. Verfahren nach Anspruch 11, **dadurch gekennzeichnet, dass** die Kalibrierung so erfolgt, dass beide Lehrengewindeteile (4, 5) zueinander in einer vorgegebenen Nullstellung sind.

13. Verfahren zum Herstellen einer Gewindenippel-Lehre (3') mit einem konischen Gewinde, insbesondere zur Durchführung des Verfahrens nach einem der Ansprüche 10 bis 12, **dadurch gekennzeichnet, dass** die Gewindenippel-Lehre (3') aus mindestens zwei separat gefertigten Teilen zusammengesetzt wird.

14. Verfahren nach Anspruch 13, **dadurch gekennzeichnet, dass** die Gewindenippel-Lehre (3') aus genau zwei separat gefertigten Teilen zusammengesetzt wird.

15. Verfahren nach Anspruch 13 oder 14, **dadurch gekennzeichnet, dass** das konische Gewinde mittels eines Drehvorgangs und gegebenenfalls durch einen sich anschließenden Feinbearbeitungsvorgang erzeugt wird.

## Claims

1. Device for measuring at least one conical thread (1), particularly a threaded box (2) or a threaded nipple (3) of an electrode of a melt metallurgical installation,
**characterised in that**
the device has a first (4) and a second (5) calibrating threaded part, which can be screwed onto or into the thread to be measured (1) and which have thread diameter (D_{g}, Dₖ) that differ from one another whereby means (6) are provided with which the relative rotational position can be determined between both calibrating threaded parts (4, 5) and the deviation of the relative rotational position from a specified rotational position can be determined.

2. Device according to claim 1, **characterised in that** the two calibrating threaded parts (4, 5) are configured as annular disks having a conical internal thread and/or a conical external thread for measuring the external thread (1) of a threaded nipple (3).

3. Device according to one of claims 1 to 2, **characterised in that** one of the calibrating threaded parts (5) is joined to an axle (7) which passes coaxially through the other calibrating threaded part (4) whereby preferably the axle (7) is disposed on the calibrating threaded part (5) having the smaller thread diameter (Dₖ) and/or whereby the axle (7) is fixable on calibrating threaded part (5) in an adjustable relative rotational position by means of a screwed connection (8).

4. Device according to one of claims 1 to 3, **characterised in that** a dial (9) is disposed on one of the two calibrating threaded parts (4, 5) or on a component (7, 11) joined thereto and a pointer (10) is disposed on the other of the two calibrating threaded parts (4, 5) or on a component (7, 11) joined thereto whereby the pointer (10) indicates a relative rotational position of the two calibrating threaded parts (4, 5) on the dial (9).

5. Device according to one of claims 1 to 4, **characterised in that** both calibrating threaded parts (4, 5), each of which has an axle (7, 11), are joined non-rotatably whereby the one axle (7) passes axially through the other axle (11) which is configured as a hollow shaft, wherein preferably handles or handle sections (15) for handling and/or screwing the calibrating threaded parts (4, 5) into or onto are disposed at one axial end of the two axles (7, 11), whereby particularly front faces (16) of the handles or handle sections (15) are axially aligned relative to each other in the ideal specified position of the two calibrating threaded parts (4, 5).

6. Device according to one of claims 1 to 5, **characterised in that** the axial extension of the two calibrating threaded parts (4, 5) is no more than 30 mm and/or **characterised in that** the incoming and/or outgoing section of the threaded bar (17) of the calibrating threaded part (4, 5) is recessed compared to the theoretical desired shape.

7. Device according to one of claims 1 to 6, **characterised in that** measuring means (12), in particular a dial gauge, are additionally present for measuring the axial gap (a) of the two calibrating threaded parts (4, 5).

8. Device according to one of claims 1 to 7, **characterised in that** the calibrating threaded parts (4, 5) for screwing onto or into are configured on or in a single conical thread (1) or for screwing onto or into are configured on or in two adjacent conical threads (1', 1") having a different orientation.

9. Device according to one of claims 1 to 8, **characterised in that** at least the two calibrating threaded parts (4, 5), preferably the entire device, are/is made of aluminium or that at least the two calibrating threaded parts (4, 5), preferably the entire device, are/is made of steel or that at least the two calibrating threaded parts (4, 5), preferably the entire device, are/is made of carbon fibre reinforced plastic.

10. Method for measuring at least one conical thread (1), particularly a threaded box or a threaded nipple of an electrode of a melt metallurgical installation, having the steps:
a) Screwing on or in of a first calibrating threaded part (5) onto or into the thread (1) to be measured having a first thread diameter (Dₖ);
b) Screwing on or in of a second calibrating threaded part (4) onto or into the thread (1) to be measured having a second thread diameter (Dg) deviating from the first thread diameter (Dₖ);
c) Determining the relative rotational position between the first and second calibrating threaded part (4, 5) and establishing the deviation between the relative rotational position determined and a specified rotational position.

11. Method according to claim 10, **characterised in that** prior to performing step a) in accordance with claim 10, calibration of the specified rotational position of the two calibrating threaded parts (4, 5) is performed when attaching them to a calibrating thread.

12. Method according to claim 11, **characterised in that** the calibration takes place in such a way that both calibrating threaded parts (4, 5) are in a specified zero position to each other.

13. Method for producing a threaded nipple gauge (3') having a conical thread, in particular for carrying out the method according to one of claims 10 to 12, **characterised in that** the threaded nipple gauge (3') is made up of at least two separately fabricated parts.

14. Method according to claim 13, **characterised in that** the threaded nipple gauge (3') is made up of exactly two separately fabricated parts.

15. Method according to claim 13 or 14, **characterised in that** the conical thread is created by means of a rotational process and if necessary by a subsequent precision machining process.

## Revendications

1. Dispositif pour mesurer au moins un filetage conique (1), en particulier d'une boîte de filetage (2) ou d'un nipple de filetage (3) d'une électrode d'une installation de métallurgie de fusion, **caractérisé en ce qu'**il présente des première (4) et deuxième (5) parties filetées de gabarit qui peuvent être vissées sur ou dans le filetage à mesurer (1) et qui présentent des diamètres de filetage (Dg, Dₖ) différents l'un de l'autre, où des moyens (6) sont prévus au moyen desquels la position de rotation relative entre les deux parties filetées de gabarit (4, 5) et l'écart de la position de rotation relative d'une position de rotation de consigne peut être déterminée.

2. Dispositif selon la revendication 1, **caractérisé en ce que** les deux parties filetées de gabarit (4, 5) sont réalisées pour la mesure du filetage extérieur (1) d'un nipple de filetage (3) comme disques annulaires avec un filetage intérieur conique et/ou un filetage extérieur conique.

3. Dispositif selon l'une des revendications 1 à 2, **caractérisé en ce que** l'une des parties filetées de gabarit (5) est reliée à un axe (7) qui traverse l'autre partie filetée de gabarit (4) coaxialement, où de préférence l'axe (7) est disposé à la partie filetée de gabarit (5) d'un diamètre de filetage plus petit (Dₖ) et/ou de préférence l'axe (7) peut être fixé à la partie filetée de gabarit (5) au moyen d'un assemblage par vissage (8) dans une position de rotation relative réglable.

4. Dispositif selon l'une des revendications 1 à 3, **caractérisé en ce qu'**il est disposé à une des deux parties filetées de gabarit (4, 5) ou à un composant (7, 11) relié à celle-ci un cadran (9), et à l'autre des deux parties filetées de gabarit (4, 5) ou à un composant (7, 11) relié à celle-ci un indicateur (10), où l'indicateur (10) indique sur le cadran (9) une position de rotation relative des deux parties filetées de gabarit (4, 5).

5. Dispositif selon l'une des revendications 1 à 4, **caractérisé en ce que** les deux parties filetées de gabarit (4, 5) sont reliées chacune à un axe (7, 11) d'une manière non tournante, où un axe (7) traverse axialement l'autre axe (11) réalisé comme arbre creux, où sont disposés de préférence à une extrémité axiale (14) des deux axes (7, 11) des poignées ou tronçons de préhension (15) pour la manipulation et/ou le vissage des parties filetées de gabarit (4, 5), où en particulier un côté frontal (16) des poignées ou tronçons de préhension (15) sont alignés axialement l'un à l'autre dans la position de consigne idéale des deux parties filetées de gabarit (4, 5).

6. Dispositif selon l'une des revendications 1 à 5, **caractérisé en ce que** l'extension axiale des deux parties filetées de gabarit (4, 5) est au maximum de 30 mm et/ou **caractérisé en ce que** la section rentrante et/ou sortante du pas de filetage (17) de la partie filetée de gabarit (4, 5) est réduite par rapport à la forme de consigne théorique.

7. Dispositif selon l'une des revendications 1 à 6, **caractérisé en ce que** sont prévus de plus des moyens de mesure (12), en particulier une horloge de mesure, pour mesurer l'écart axial (a) des deux parties filetées de gabarit (4, 5).

8. Dispositif selon l'une des revendications 1 à 7, **caractérisé en ce que** les parties filetées de gabarit (4, 5) sont réalisées pour le vissage dans ou sur un seul filetage conique (1) et sont réalisées pour le vissage sur ou dans deux filetages coniques (1', 1") avoisinants d'une orientation différente.

9. Dispositif selon l'une des revendications 1 à 8, **caractérisé en ce qu'**au moins les deux parties filetées de gabarit (4, 5), de préférence l'ensemble du dispositif, est ou sont réalisé(s) en aluminium, ou bien **en ce qu'**au moins les deux parties filetées de gabarit (4, 5), de préférence l'ensemble du dispositif, sont réalisé(s) en acier ou bien en ce qu'au moins les deux parties filetées de gabarit (4, 5), de préférence l'ensemble du dispositif, est ou sont constitué(s) de matériau synthétique renforcé par des fibres de carbone.

10. Procédé pour mesurer au moins un filetage conique (1), en particulier une boîte de filetage ou un nipple de filetage d'une électrode d'une installation de métallurgie de fusion, qui présente les étapes:
a) vissage d'une première partie de filetage de gabarit (5) sur ou dans le filetage à mesurer (1) avec un premier diamètre de filetage (Dₖ);
b) vissage d'une deuxième partie de filetage de gabarit (4) sur ou dans le filetage à mesurer (1) avec un deuxième diamètre de filetage (Dg) déviant du premier diamètre de filetage (Dₖ);
c) détermination de la position de rotation relative entre les première et deuxième parties de filetage de gabarit (4, 5) et la constatation de l'écart de la position de rotation relative déterminée à une position de rotation de consigne.

11. Procédé selon la revendication 10, **caractérisé en ce qu'**avant l'exécution de l'étape (a) selon la revendication 20, on procède à une calibrage de la position de rotation de consigne des deux parties de filetage de gabarit (4, 5) lors de l'application de celles-ci à un filetage de gabarit.

12. Procédé selon la revendication 11, **caractérisé en ce que** le calibrage a lieu de telle sorte que les deux parties de filetage de gabarit (4, 5) se trouvent dans une position zéro prédéfinie l'une relativement à l'autre.

13. Procédé de fabrication d'un gabarit de nipple fileté (3') avec un filetage conique, en particulier pour l'exécution du procédé selon l'une des revendications 10 à 12, **caractérisé en ce que** le gabarit de nipple fileté (3') est constitué d'au moins deux parties fabriquées séparément.

14. Procédé selon la revendication 13, **caractérisé en ce que** le gabarit de nipple fileté (3') est constitué précisément de deux parties fabriquées séparément.

15. Procédé selon la revendication 13 ou 14, **caractérisé en ce que** le filetage conique est produit au moyen d'une opération de tournage et le cas échéant également par une opération d'usinage qui fait suite.
